# EUROPEAN PATENT APPLICATION

(11) **EP 4 691 804 A1**
(43) Date of publication of application: **11.02.2026**
(21) Application number: 25192978.2
(22) Date of filing: 31.07.2025
(51) Int. Cl.: B60C 23/04

(54) **AN IN-WHEEL SENSOR SYSTEM AND A METHOD FOR A HEAVY-DUTY VEHICLE**

(30) Priority: 07.08.2024 SE 2450832
(71) Applicant: Volvo Truck Corporation, 405 08 Göteborg (SE)
(72) Inventor: RYDSTRÖM, Jan Mats Åke, 427 39 Billdal (SE); MARZBANRAD, Alireza, 417 65 Göteborg (SE); JONASSON, Mats, 433 49 Partille (SE); KUMRU, Murat, 413 06 Gothenburg (SE)
(74) Representative: Zacco Sweden AB

(57) **Abstract**

An in-wheel sensor system for a heavy-duty vehicle, wherein the in-wheel sensor system is integrated with a wheel and comprises: one or more in-wheel sensors attached to or mounted inside the wheel, configured to obtain in-wheel sensor data; a control unit mounted inside the wheel, configured to process the obtained in-wheel sensor data and transmit the processed data to an external device, and a power supply configured to transfer electrical power to the in-wheel system, wherein the power supply is at least partly located external to the wheel.

## Description

### TECHNICAL FIELD

The disclosure relates generally to in-wheel sensor systems. In particular aspects, the disclosure relates to an in-wheel sensor system and a method for a heavy-duty vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The development of in-wheel sensor platforms is critical for advancing motion estimation and vehicle motion management (VMM) technologies in heavy-duty vehicles. Traditionally, tire pressure monitoring systems (TPMS) employ in-wheel sensors that utilize batteries and/or energy harvesting methods, typically designed to meet the lifetime requirements of the tire. However, these power sources fall short for more advanced sensor functionalities that demand continuous operation. Moreover, the rotating motion of the wheels introduces challenges in providing power supply and data transmission, which needs to be addressed to ensure reliable and efficient sensor operation.

Hence, there is a need in-wheel sensor platforms that can accommodate the enhanced power and operational demands of next-generation in-wheel sensor systems, thereby improving vehicle safety, performance, and reliability.

### SUMMARY

According to a first aspect of the disclosure, an in-wheel sensor system for a heavy-duty vehicle is disclosed. The in-wheel sensor system is integrated with a wheel and comprises one or more in-wheel sensors attached to or mounted inside the wheel, configured to obtain in-wheel sensor data. The in-wheel sensor system also comprises a control unit mounted inside the wheel, configured to process the obtained in-wheel sensor data and transmit the processed data to an external device located external to the wheel. The in-wheel sensor system also comprises a power supply configured to transfer electrical power to the in-wheel system, wherein the power supply is at least partly located external to the wheel. The first aspect of the disclosure may seek to solve the problem of providing increased power transfer to accommodate the operational demands of next-generation in-wheel sensor systems. A technical benefit may include improved capabilities of the sensor system.

Optionally in some examples, including in at least one preferred example, the power supply comprises a generator, said generator including magnets arranged externally to the wheel on a non-rotating fixture of the vehicle and one or more coils mounted on or inside the wheel, configured to generate electrical power through magnetic induction when the wheel is rotating. A technical benefit may include providing increased power to accommodate the operational demands of the in-wheel sensor system.

Optionally in some examples, including in at least one preferred example, the non-rotating fixture comprises a non-rotating part of a wheel hub assembly. A technical benefit may include that the air gap between the magnets and the coils can be small, which is beneficial for increasing the efficiency of power generation.

Optionally in some examples, including in at least one preferred example, the non-rotating fixture comprises a fender and/or a splashguard.

Optionally in some examples, including in at least one preferred example, the power supply comprises a slip ring configured to transfer electrical power from an external power supply to the wheel. A technical benefit may include providing increased power to accommodate the operational demands of the in-wheel sensor system, and ensuring consistent power delivery that is not dependent on the wheel's rotation.

Optionally in some examples, including in at least one preferred example, the control unit is configured to transmit data via the slip ring. A technical benefit may include enhanced data transmission.

Optionally in some examples, including in at least one preferred example, the slip ring is mounted on the wheel axle, and an interface for vehicle-to-wheel power transfer and/or data transfer is located on the surface area connecting the wheel hub to the wheel rim of the wheel. A technical benefit may include improved reliability as the placement of the interface provides protection from dirt, water, and other environmental factors, reducing maintenance needs and improving system longevity.

Optionally in some examples, including in at least one preferred example, the control unit is configured to transfer data by using a wireless communication protocol. A technical benefit may include not having to rely on wired communication where any cable malfunction will disrupt data transfer.

Optionally in some examples, including in at least one preferred example, the one or more sensors comprises any combination of an inertial measurement unit, a microphone, a pressure sensor, and/or a radar. A technical benefit may include the ability to continuously monitor wheel-related parameters, such as wheel stability, tire pressure, and other environmental conditions, in real-time.

Optionally in some examples, including in at least one preferred example, the control unit is configured to process the obtained in-wheel sensor data by detecting events from the obtained in-wheel sensor data, and wherein the detected events form part of the processed data. A technical benefit may include reduced throughput requirements on the communication interface between the in-wheel control unit and the external device, as only the detected events, rather than all the obtained in-wheel sensor data, need to be communicated.

Optionally in some examples, including in at least one preferred example, the control unit is configured to process the obtained in-wheel sensor data by determining vehicle states based on the obtained in-wheel sensor data and a predictive model, and wherein the determined states form part of the processed data. A technical benefit may include reduced throughput requirements on the communication interface between the in-wheel control unit and the external device, as only the determined states, rather than all of the obtained in-wheel sensor data, need to be communicated.

Optionally in some examples, including in at least one preferred example, the obtained in-wheel sensor data originates from at least two different types of in-wheel sensors, and wherein processing the in-wheel sensor data involves employing sensor fusion techniques on the obtained in-wheel sensor data. A technical benefit may include enhanced accuracy and reliability of detected events and/or determined vehicle states.

Optionally in some examples, including in at least one preferred example, the external device is a control unit configured for vehicle motion management of the heavy-duty vehicle. A technical benefit may include improved control of the vehicle due to higher data rates from the in-wheel sensor system, thereby enhancing the accuracy of the vehicle motion management system.

According to a second aspect of the disclosure, a heavy-duty vehicle is disclosed. The vehicle comprises a power supply and a wheel equipped with an in-wheel sensor system according to the first aspect of the disclosure. The second aspect of the disclosure may seek to solve the problem of providing increased power to accommodate the operational demands of next-generation in-wheel sensor systems. A technical benefit may include improved capabilities of the sensor system.

According to a third aspect of the disclosure, a method for an in-wheel sensor system of a heavy-duty vehicle is disclosed. The method comprises receiving electrical power to the in-wheel system from a power supply that is at least partly located external to the wheel. The method further comprises obtaining in-wheel sensor data from one or more in-wheel sensors inside the wheel. The method also comprises processing the obtained in-wheel sensor data by a control unit inside the wheel. Lastly, the method also comprises transmitting the processed data to an external device located external to the wheel. The third aspect of the disclosure may seek to solve the problem of providing increased power to accommodate the operational demands of next-generation in-wheel sensor systems. A technical benefit may include improved capabilities of the sensor system.

Optionally in some examples, including in at least one preferred example, the power supply comprises a generator, said generator including magnets arranged externally to the wheel on a non-rotating fixture of the vehicle and one or more coils mounted on or inside the wheel, configured to generate electrical power through magnetic induction. A technical benefit may include providing increased power to accommodate the operational demands of the in-wheel sensor system.

Optionally in some examples, including in at least one preferred example, the non-rotating fixture comprises a non-rotating part of a wheel hub assembly. A technical benefit may include that the air gap between the magnets and the coils can be small, which is beneficial for increasing the efficiency of power generation. Optionally in some examples, the non-rotating fixture may comprise a fender and/or a splashguard.

Optionally in some examples, including in at least one preferred example, the power supply comprises a slip ring configured to transfer electrical power from an external power supply to the wheel. A technical benefit may include providing increased power to accommodate the operational demands of the in-wheel sensor system, and ensuring consistent power delivery that is not dependent on the wheel's rotation.

Optionally in some examples, including in at least one preferred example, the slip ring is mounted on the wheel axle, and an interface for vehicle-to-wheel power transfer and/or data transfer is located on the surface area connecting the wheel hub to the wheel rim of the wheel. A technical benefit may include improved reliability as the interface's placement provides protection from dirt, water, and other environmental factors, reducing maintenance needs and improving system longevity.

Optionally in some examples, including in at least one preferred example, the one or more sensors comprises any combination of an inertial measurement unit, a microphone, a pressure sensor, and/or a radar. A technical benefit may include the ability to continuously monitor wheel-related parameters, such as wheel stability, tire pressure, and other environmental conditions, in real-time.

Optionally in some examples, including in at least one preferred example, processing comprises detecting events from the obtained in-wheel sensor data, and wherein the detected events form part of the processed data. A technical benefit may include reduced throughput requirements on the communication interface between the in-wheel control unit and the external device, as only the detected events, rather than all of the obtained in-wheel sensor data, need to be communicated.

Optionally in some examples, including in at least one preferred example, processing comprises determining vehicle states based on the obtained in-wheel sensor data and a predictive model, and wherein the determined vehicle states form part of the processed data. A technical benefit may include reduced throughput requirements on the communication interface between the in-wheel control unit and the external device, as only the determined states, rather than all of the obtained in-wheel sensor data, need to be communicated.

Optionally in some examples, including in at least one preferred example, the obtained in-wheel sensor data originates from at least two in-wheel sensors of different types, and wherein processing the in-wheel sensor data involves employing sensor fusion techniques on the obtained in-wheel sensor data. A technical benefit may include enhanced accuracy and reliability of the detected events and/or determined vehicle states.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1A illustrates an example of a vehicle with an in-wheel sensor system.
FIG. 1B is a side view of the in-wheel sensor system shown in FIG. 1A.
FIG. 2 illustrates an example of a generator having magnets arranged externally to the wheel on a non-rotating fixture, e.g. a fender and/or a splashguard, and one or more coils mounted on or inside the rotating wheel.
FIG. 3 illustrates an example of a slip ring configured to transfer electrical power from an external power supply to the wheel.
FIG. 4 is a flow chart of a method for an in-wheel sensor system of a heavy-duty vehicle.
FIG. 5A schematically illustrates a control unit.
FIG. 5B shows an example of a computer program product.
FIG. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

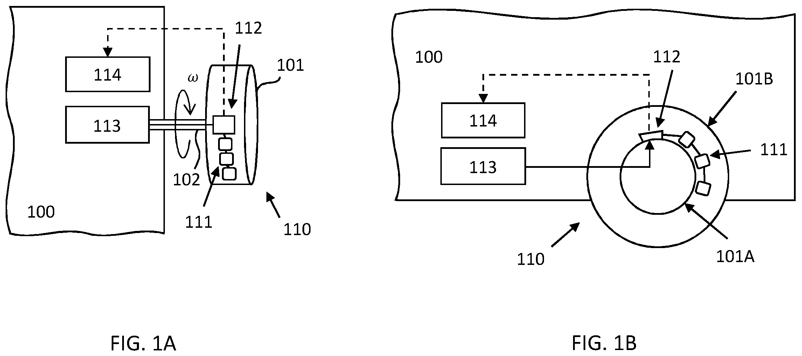

Figs. 1A and 1B illustrate a first aspect of the disclosure relating to an in-wheel sensor system 110 for a wheel 101 of a heavy-duty vehicle 100. The terms "in-wheel" and "inside the wheel" will typically refer to anything located within the air-filled space between the tire 101B and the part of the wheel rim 101A that faces the tire. However, these terms may also encompass components integrated within the wheel rim and the tire itself.

The in-wheel sensor system 110 comprises one or more in-wheel sensors 111 mounted inside the wheel and configured to obtain in-wheel sensor data. Typically, the in-wheel sensors will be of at least two different types, which facilitates the application of sensor fusion techniques. The in-wheel sensors 111 may be placed on the wheel's exterior, embedded within the tire tread, or positioned inside the tire, on the wheel rim, or embedded within the wheel rim. The one or more sensors may comprise any combination of an inertial measurement unit (IMU), a microphone, a pressure sensor, a radar, a temperature sensor, and/or an optical sensor. An IMU can be used to detect and measure the vehicle's acceleration, orientation, and gravitational forces. An advantage of using an IMU is its ability to provide precise motion data to a vehicle motion management (VMM) system. A microphone can be used to detect sounds related to tire damage or road surface analysis. An advantage of this application is that it allows for early detection of issues that may not be visually apparent, potentially preventing further damage or unsafe conditions. A pressure sensor can continuously monitor the air pressure inside the tires. A radar sensor can detect objects, vehicles, or obstacles in the vicinity of the vehicle. A temperature sensor can monitor the temperature of the tire. An advantage of this sensor may be early warning against overheating, which can prevent tire blowouts and reduce wear.

The in-wheel sensor system 110 also comprises a control unit 112 mounted inside the wheel. The control unit is configured to process the obtained in-wheel sensor data and transmit the processed data to an external device 114, wherein the external device 114 is external to the wheel 101. In next-generation in-wheel sensor systems, the obtained in-wheel sensor data may comprise large amounts of data that may not all be realistically transferred to the external device 114 (e.g., a VMM system) as it puts excessive requirements on the data interface between the external device and the wheel. Hence, an object of the control unit 112 is to process the obtained in-wheel sensor data to reduce the data throughput requirements.

In some examples, processing the obtained in-wheel sensor data may simply involve preparing the data for transmission, but it may also include applying various signal processing techniques. Additionally, this processing may entail making decisions and issuing alerts based on the analysis of the in-wheel sensor data.

The control unit 112 may be configured to process the obtained in-wheel sensor data by detecting events from the obtained in-wheel sensor data, and wherein the detected events form part of the processed data. For example, the processing may involve detecting events using the obtained in-wheel sensor data from the different sensors, such as combining in-wheel sensor data from a pressure sensor and a microphone to detect a tire explosion, and communicate the detection instead of the obtained in-wheel sensor data. An advantage of processing in-wheel sensor data locally is that it reduces the throughput requirements on the communication interface between control unit 112 and external device 114.

The control unit 112 may be configured to process the obtained in-wheel sensor data by determining vehicle states from the obtained in-wheel sensor data, and wherein the processed data comprises the determined states. For example, processing may involve determining lateral motion, such as lateral speed v_{y} and/or lateral acceleration a_{y}, by combining in-wheel sensor data from an IMU and a radar with a wheel model (e.g. a single track model) and potentially employing Kalman filtering techniques. An advantage of processing in-wheel sensor data locally is that it reduces the requirements on the communication interface between control unit 112 and external device 114.

The obtained in-wheel sensor data originates from at least two different types of in-wheel sensors, and wherein processing the in-wheel sensor data involves employing sensor fusion techniques on the obtained in-wheel sensor data. Sensor fusion techniques may include the use of algorithms such as Kalman filters, Bayesian networks, or neural networks, which integrate and analyze data from multiple sensor sources to achieve more accurate and reliable estimates. These techniques can optimize the detection of vehicle states and events by compensating for the individual limitations of each sensor type, enhancing the system's overall performance and reliability.

Transmitting the processed data may be accomplished by using a wireless communication protocol. The wireless communication protocol may be a short-range communication protocol such as Bluetooth or DSRC. An advantage of using a wireless signal to communicate the processed data is that it avoids any cable malfunctions that may disrupt data transfer.

The external device 115 may be an external control unit configured to control vehicle motion management (VMM) of the heavy-duty vehicle, wherein the processed data may be used to monitor and control the vehicle's motion. A VMM system operates within a vehicle's control architecture, handling lower-level control based on inputs from a traffic situation management (TSM) system. While the TSM plans driving operations over a longer time horizon (about 10 seconds), the VMM works with a shorter time frame (about 1 second) to turn these plans into control commands. The VMM uses data from sensors like GPS, radar, and lidar to monitor vehicle motion and determine control commands, which may be further enhanced by the use of in-wheel sensor data.

The in-wheel sensor system 110 comprises a power supply 113 configured to transfer electrical power to the in-wheel system, wherein the power supply is at least partly located external to the wheel. An advantage of having the power supply system at least partly external to the wheel is that it enables applications requiring more power, such as obtaining high-rate or high-resolution in-wheel sensor data, which can be critical for real-time monitoring and advanced VMM systems.

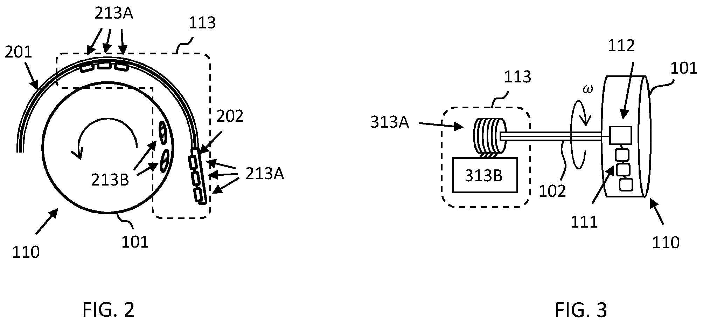

Fig. 2 illustrates an example where the power supply 113 comprises a generator, said generator including magnets 213A arranged externally to the wheel on a non-rotating fixture 201, 202 of the vehicle and one or more coils 213B mounted on or inside the rotating wheel, configured to generate electrical power through magnetic induction. Typically, the magnets are permanent magnets, but the magnets may also be electromagnets, which may be preferable if the air gap between the magnets and the coil is too large for permanent magnets. In one example, the non-rotating fixture may comprise a fender 201 and/or a splashguard 202. In another example, not disclosed in Fig. 2, the non-rotating fixture comprises a non-rotating part of a wheel hub assembly, e.g. a brake caliper, and the one or more coils may be mounted on or inside the wheel rim 101A. Placing the magnets on the wheel hub assembly can reduce the air gap between the magnets and the coils, which improves the efficiency of power generation.

Fig. 3 illustrates an example where the power supply 113 comprises a slip ring 313A and configured to transfer electrical power from an external power supply 313B in the vehicle to the rotating wheel. The slip ring may be mounted on the wheel axle 102, and an interface for vehicle-to-wheel power transfer and/or communication can be located on the surface area connecting the wheel hub to the wheel rim. Although slip rings are used in various applications to facilitate electrical connections between stationary and rotating parts, their use for transferring electrical power to a vehicle wheel is not known. This adaptation enables continuous power delivery to the in-wheel sensor system, which is critical for advanced in-wheel sensor system that also performs processing before transmitting the processed data to an external device. In one example, the control unit 112 may be further configured to communicate data via the slip ring to an external device 114. The slip ring may be mounted on the wheel axle, and an interface for vehicle-to-wheel power transfer and/or data transfer is located on the surface area connecting the wheel hub to the wheel rim of the wheel. An advantage of having the interface on the surface area between the wheel hub and the wheel rim is that it provides protection from dirt, water, and other environmental factors.

Figs. 1A and 1B also illustrate a second aspect of the disclosure relating to a vehicle 100 comprising one or more wheels 101 equipped with an in-wheel sensor system according to any of the examples described in the first aspect of the disclosure. An advantage of the second aspect is that it enables increased power transfer to accommodate the operational demands of next-generation in-wheel sensor systems.

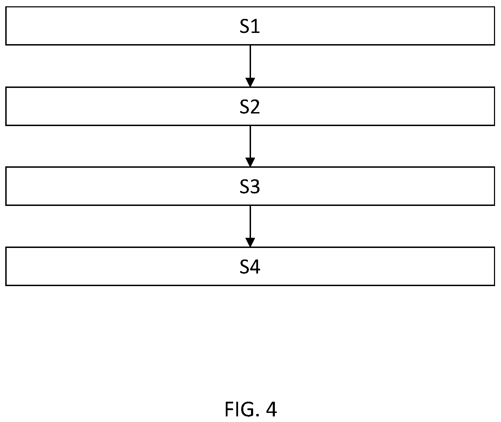

Fig. 4 illustrates a third aspect of the disclosure, relating to a method for an in-wheel sensor system. The in-wheel sensor system 110 is integrated with a wheel 101 comprising a wheel rim 101A and a tire 101B. The method comprises the steps of receiving S1, obtaining S2 processing S3 and communicating S4. The method may further comprise the step of adjusting S4. It should be noted that any of the aforementioned aspects relating to the in-wheel sensor system also applies to the method.

The step of receiving S1 comprises receiving electrical power to the in-wheel system 110 from a power supply 114 that is at least partly located external to the wheel 101, where the power supply 114 can be any of the power supplies disclosed in the examples of the first aspect of the disclosure.

The step of obtaining S2 comprises obtaining in-wheel sensor data from one or more in-wheel sensors 111 attached to or mounted inside the wheel 101. The in-wheel sensors 111 may be placed on the wheel's exterior, embedded within the tire tread, or positioned inside the tire, on the wheel rim, or embedded within the wheel rim. The one or more in-wheel sensors 111 may comprise any combination of an inertial measurement unit, a microphone, a pressure sensor, a radar, a temperature sensor, and/or an optical sensor.

The step of processing S3 comprises processing the obtained in-wheel sensor data by a control unit 112 inside the wheel 101. In some examples, processing the obtained in-wheel sensor data may simply involve preparing the data for transmission, but it may also include applying various signal processing techniques. Additionally, this processing may entail making decisions and issuing alerts based on the analysis of the in-wheel sensor data.

The step of processing S3 may comprise detecting events from the obtained in-wheel sensor data, wherein the detected events form part of the processed data. In some examples, processing may involve detecting events using the obtained in-wheel sensor data from the different sensors, such as combining in-wheel sensor data from a pressure sensor and a microphone to detect a tire explosion, and communicate the detection instead of the obtained in-wheel sensor data. An advantage of processing in-wheel sensor data locally is that it can significantly reduce the requirements on the communication interface between control unit 112 and external device 114.

The step of processing S3 may comprise determining vehicle states based on the obtained in-wheel sensor data and a predictive model, and wherein the determined vehicle states form part of the processed data. For example, processing may involve determining lateral motion, such as lateral speed v_{y} and/or lateral acceleration a_{y}, by combining in-wheel sensor data from an IMU and a radar with a predictive wheel model (e.g. a single track model) and potentially employing Kalman filtering techniques. An advantage of processing in-wheel sensor data locally is that it can significantly reduce the requirements on the communication interface between control unit 112 and external device 114.

The obtained in-wheel sensor data may originate from at least two in-wheel sensors of different types, and processing the in-wheel sensor data may involve employing sensor fusion techniques on the obtained in-wheel sensor data. Sensor fusion techniques may include the use of algorithms such as Kalman filters, Bayesian networks, or neural networks, which integrate and analyze data from multiple sensor sources to achieve more accurate and reliable estimates. These techniques can optimize the detection of vehicle states and events by compensating for the individual limitations of each sensor type, enhancing the system's overall performance and reliability.

The step of transmitting S4 comprises transmitting the processed data to an external device 114 located external to the wheel 114. In one example, transmitting the processed data may be accomplished by using a wireless communication protocol. The wireless communication protocol may be a short-range communication protocol such as Bluetooth or DSRC. An advantage of using a wireless signal to communicate the processed data is that it avoids any cable malfunctions that may disrupt data transfer. The external device 115 may be an external control unit configured to control vehicle motion management (VMM) of the heavy-duty vehicle, wherein the processed data may be used to monitor and control the vehicle's motion.

The discussion that follows will briefly cover some alternative aspects of the first, second, and third aspects.

The purpose of this sensor platform, i.e., the in-wheel sensor system 110, is to capture data related to a wheel at high rates and process this data near the source, inside the tire of the rotating wheel. Various types of sensors can be connected to the platform. An in-wheel computer, i.e., the control unit 112, will process the data from these sensors into a status report, which will then be transmitted to a vehicle control unit, e.g. a vehicle motion management system.

A wheel of the vehicle rotates at an angular velocity ω. Due to the rotation of the wheel relative to the vehicle's main body, it is not possible to connect the sensor directly to the power or communications backbone of the vehicle, as drawing a power cable is impractical. Many valuable measurements can be obtained from sensors placed on the wheel's exterior, embedded within the tire tread, or positioned inside the tire. For example, a flex sensor embedded in the tire tread that directly measures tire forces. Moreover, IMUs and pressure sensors inside the tire can detect tire explosions and collect precise motion data related to the wheel and the overall vehicle.

Two major challenges must be addressed to fully leverage the capabilities of tire-mounted sensor systems. The first challenge is to supply enough power to the sensors to enable it to operate at high rate and perform advanced signal processing operations. Typically, a battery alone is not sufficient for most such sensor applications. The second challenge involves transmitting the measured data from the sensors to the vehicle motion management system (VMM), where it can be utilized in applications such as vehicle control. Given the large quantities of data that will be generated, a high-capacity, reliable data link is required.

In one example, magnets can be embedded in the wheel fender, splash guard or any other non-rotating fixture, with coils mounted on the wheel, e.g., inside the tire or embedded in the tire tread (potentially alongside the flex sensors). As the wheel rotates, the coils passing by the magnets generate a current. This current provides sufficient power to support relatively advanced sensor operations.

In another example, a slip ring can be used to both supply power and facilitate high-capacity communications. While slip rings are generally known, they have not been utilized in this specific application before. A slip ring is an electromechanical device that enables the transmission of power and electrical signals from a stationary structure to a rotating one. It is applicable in any electromechanical system requiring rotation while transmitting power or signals.

When sufficient power is available inside the tire, it becomes feasible to install more powerful computational nodes within the tire. This proximity allows for the implementation of advanced signal processing applications, such as tire explosion detection systems, directly adjacent to the sensors, providing a significant advantage.

Additionally, an objective is to develop an actively powered sensor and processing platform that comprises various types of sensors, such as IMUs, microphones, pressure sensors, and radar sensors. These sensor signals will be processed locally inside the tire, and a tire state signal will then be communicated at a high rate to the central VMM controller. This approach reduces the demands on the data interface between the tire and the vehicle's central control unit, thereby enhancing the system's reliability.

The in-wheel sensor system is actively powered by the vehicle. Thus, unlike known tire pressure monitoring systems and radio frequency identification (RFID) systems, which are battery-powered, this sensor system can incorporate much more powerful processing units for sensor fusion and event detection inside the tire.

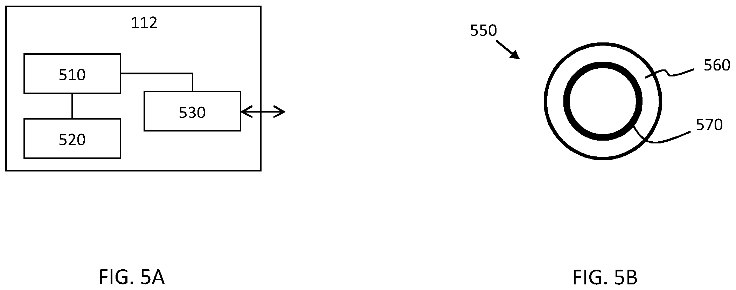

FIG. 5A schematically illustrates, in terms of a number of functional units, the components of a control unit 122 according to aspects of the discussions and methods disclosed herein. This control unit 122 may typically be comprised in the vehicle 100. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 520. The processing circuitry 510 may further be provided as at least one application specific integrated circuit ASIC, or field programmable gate array FPGA.

Particularly, the processing circuitry 510 is configured to cause the control unit 122 to perform a set of operations, or steps, such as the methods discussed in connection to FIG. 4. For example, the storage medium 520 may store the set of operations, and the processing circuitry 510 may be configured to retrieve the set of operations from the storage medium 520 to cause the control unit 130 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 112 may further comprise an interface 530 for communications with at least one external system, such as the in-wheel sensors 111 and the external device 114. As such the interface 530 may comprise one or more transmitters and receivers, comprising analogue and digital components and a suitable number of ports for wireline or wireless communication.

The processing circuitry 510 controls the general operation of the control unit 112, e.g., by sending data and control signals to the interface 530 and the storage medium 520, by receiving data and reports from the interface 530, and by retrieving data and instructions from the storage medium 520. Other components, as well as the related functionality, of the control node are omitted in order not to obscure the concepts presented herein.

FIG. 5B shows an example of a computer program product. A computer readable medium 560 carrying a computer program 570 comprising program code means for performing the steps of aforementioned method when said program product is run on a computer or on processing circuitry 510 of a control unit 122.

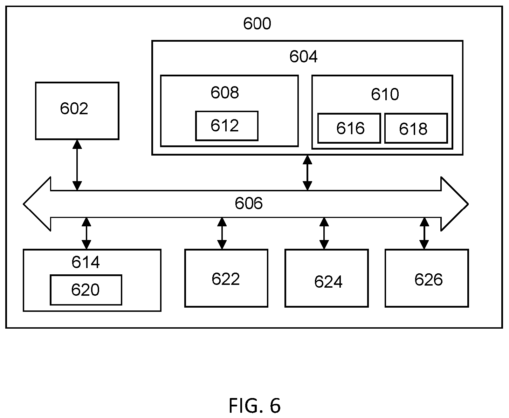

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: An in-wheel sensor system 110 for a heavy-duty vehicle 100, wherein the in-wheel sensor system 110 is integrated with a wheel 101 and comprises: one or more in-wheel sensors 111 mounted inside a wheel 101, configured to obtain in-wheel sensor data; a control unit 112 mounted inside the wheel, configured to process the obtained in-wheel sensor data, and transmit the processed data to an external device 114 located external to the wheel 101; and a power supply 113 configured to transfer electrical power to the in-wheel system, wherein the power supply 113 is at least partly located external to the wheel 101.

Example 2: The in-wheel sensor system 110 of example 1, wherein the power supply 113 comprises a generator, said generator including magnets 213A arranged externally to the wheel 101 on a non-rotating fixture of the vehicle and one or more coils 213B mounted on or inside the rotating wheel, configured to generate electrical power through magnetic induction when the wheel is rotating.

Example 3: The in-wheel sensor system 110 of example 2, wherein the non-rotating fixture comprises a non-rotating part of a wheel hub assembly, a fender 201 and/or a splashguard 202.

Example 4: The in-wheel sensor system 110 of any of examples 1-3, wherein the power supply comprises a slip ring 313A configured to transfer electrical power from an external power supply 313B to the wheel 101.

Example 5: The in-wheel sensor system 110 of example 4, wherein the control unit 112 is configured to transmit data via the slip ring 313A.

Example 6: The in-wheel sensor system 110 of any of examples 4-5, wherein the slip ring 313A is mounted on the wheel axle 102, and an interface for vehicle-to-wheel power transfer and/or data transfer is located on the surface area connecting the wheel hub to the wheel rim 101A of the wheel 101.

Example 7: The in-wheel sensor system 110 of examples 1-6, wherein the control unit 112 is configured to process the obtained in-wheel sensor data by detecting events from the obtained in-wheel sensor data, and wherein the detected events form part of the processed data.

Example 8: The in-wheel sensor system 110 of examples 1-7, wherein the control unit 112 is configured to process the obtained in-wheel sensor data by determining vehicle states based on the obtained in-wheel sensor data and a predictive model, and wherein the determined states form part of the processed data.

Example 9: The in-wheel sensor system 110 of any of examples 7-8, wherein the obtained in-wheel sensor data originates from at least two different types of in-wheel sensors, and wherein processing the in-wheel sensor data involves employing sensor fusion techniques on the obtained in-wheel sensor data.

Example 10: The in-wheel sensor system 110 of any of examples 1-9, wherein the external device 114 is a control unit configured for vehicle motion management of the heavy-duty vehicle.

Example 11: A heavy-duty vehicle 100 comprising a power supply 113 and a wheel 101 equipped with an in-wheel sensor system 110 according to any of examples 1-10.

Example 12: A method for an in-wheel sensor system 110 of a heavy-duty vehicle, wherein the in-wheel sensor system 110 is integrated with a wheel 101 and the method comprises: receiving S1 electrical power to the in-wheel system 110 from a power supply 113 that is at least partly located external to the wheel 101; obtaining S2 in-wheel sensor data from one or more in-wheel sensors 111 inside the wheel 101; processing S3 the obtained in-wheel sensor data by a control unit 112 inside the wheel 101; and transmitting S4 the processed data to an external device 114 located external to the wheel 101.

Example 13: The method of example 12, wherein the power supply 113 comprises a generator, said generator including magnets 213A arranged externally to the wheel on a non-rotating fixture 121 of the vehicle and one or more coils 213B mounted on or inside the rotating wheel, configured to generate electrical power through magnetic induction when the wheel is rotating.

Example 14: The method of example 13, wherein the non-rotating fixture comprises a non-rotating part of a wheel hub assembly, a fender 201 and/or a splash-guard 202.

Example 15: The method of any of examples 12-14, wherein the power supply comprises a slip ring 313A configured to transfer electrical power from the vehicle to the wheel 101.

Example 16: The method of examples 12-15, wherein processing S3 comprises detecting events from the obtained in-wheel sensor data, and wherein the detected events form part of the processed data.

Example 17: The method of examples 12-16, wherein processing S3 comprises determining vehicle states based on the obtained in-wheel sensor data and a predictive model, and wherein the determined vehicle states form part of the processed data.

Example 18: The in-wheel sensor system of any of examples 1-8, wherein the obtained in-wheel sensor data originates from at least two in-wheel sensors of different types, and wherein processing the in-wheel sensor data involves employing sensor fusion techniques on the obtained in-wheel sensor data.

Example 19: A computer program 550 comprising program code means for performing the steps of any of examples 12-18 when said program is run on a computer or on processing circuitry 510 of a control unit 112.

Example 20: A computer readable medium 560 carrying a computer program 570 comprising program code means for performing the steps of any of examples 11-18 when said program product is run on a computer or on processing circuitry 510 of a control unit 112.

Example 21: The in-wheel sensor system 110 of example 1-9, wherein the control unit 112 is configured to transfer data by using a wireless communication protocol.

Example 22: The in-wheel sensor system 110 of any of examples 1-9, wherein the one or more sensors 111 comprises any combination of an inertial measurement unit, a microphone, a pressure sensor, and/or a radar.

Example 23: The method of example 15, wherein the control unit 112 is configured to transfer data via the slip ring 313A.

Example 24: The method of examples 15 or 23, wherein the slip ring 313A is mounted on the wheel axle 102, and an interface for vehicle-to-wheel power transfer and/or communication is located on the surface area connecting the wheel hub to the wheel rim 101A of the wheel 101.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An in-wheel sensor system (110) for a heavy-duty vehicle (100), wherein the in-wheel sensor system (110) is integrated with a wheel (101) and comprises:
one or more in-wheel sensors (111) attached to or mounted inside the wheel (101), configured to obtain in-wheel sensor data,
a control unit (112) mounted inside the wheel, configured to process the obtained in-wheel sensor data, and transmit the processed data to an external device (114) located external to the wheel (101), and
a power supply (113) configured to transfer electrical power to the in-wheel system,
wherein the power supply (113) is at least partly located external to the wheel (101).

2. The in-wheel sensor system (110) of claim 1, wherein the power supply (113) comprises a generator, said generator including magnets (213A) arranged externally to the wheel (101) on a non-rotating fixture of the vehicle and one or more coils (213B) mounted on or inside the wheel (101), configured to generate electrical power through magnetic induction when the wheel is rotating.

3. The in-wheel sensor system (110) of claim 2, wherein the non-rotating fixture comprises a non-rotating part of a wheel hub assembly, a fender (201) and/or a splashguard (202).

4. The in-wheel sensor system (110) of any of claims 1-3, wherein the power supply comprises a slip ring (313A) configured to transfer electrical power from an external power supply (313B) to the wheel (101).

5. The in-wheel sensor system (110) of any of claims 1-4, wherein the control unit (112) is configured to process the obtained in-wheel sensor data by determining vehicle states based on the obtained in-wheel sensor data and a predictive model, and wherein the determined states form part of the processed data.

6. The in-wheel sensor system (110) of any of claims 1-5, wherein the obtained in-wheel sensor data originates from at least two different types of in-wheel sensors, and wherein processing the in-wheel sensor data involves employing sensor fusion techniques on the obtained in-wheel sensor data.

7. The in-wheel sensor system (110) of any of claims 1-6, wherein the external device (114) is a control unit configured for vehicle motion management of the heavy-duty vehicle (100).

8. A heavy-duty vehicle (100) comprising a power supply (113) and a wheel (101) equipped with an in-wheel sensor system (110) according to any of claims 1-7.

9. A method for an in-wheel sensor system (110) of a heavy-duty vehicle, wherein the in-wheel sensor system (110) is integrated with a wheel (101) and the method comprises:
receiving (S1) electrical power to the in-wheel system (110) from a power supply (113) that is at least partly located external to the wheel (101);
obtaining (S2) in-wheel sensor data from one or more in-wheel sensors (111) attached to or mounted inside the wheel (101);
processing (S3) the obtained in-wheel sensor data by a control unit (112) inside the wheel (101); and
transmitting (S4) the processed data to an external device (114) located external to the wheel (101).

10. The method of claim 9, wherein the power supply (113) comprises a generator, said generator including magnets (213A) arranged externally to the wheel on a non-rotating fixture (121) of the vehicle and one or more coils (213B) mounted on or inside the rotating wheel, configured to generate electrical power through magnetic induction when the wheel is rotating.

11. The method of claim 10, wherein the non-rotating fixture comprises a non-rotating part of a wheel hub assembly, a fender (201) and/or a splash-guard (202).

12. The method of any of claims 9-11, wherein the power supply comprises a slip ring (313A) configured to transfer electrical power from the vehicle to the wheel (101).

13. The method of any of claims 9-12, wherein processing (S3) comprises determining vehicle states based on the obtained in-wheel sensor data and a predictive model, and wherein the determined vehicle states form part of the processed data.

14. The method of any of claims 9-13, wherein the obtained in-wheel sensor data originates from at least two in-wheel sensors of different types, and wherein processing the in-wheel sensor data involves employing sensor fusion techniques on the obtained in-wheel sensor data.

15. A computer readable medium (560) carrying a computer program (570) comprising program code means for performing the steps of any of claims 9-14 when said program product is run on a computer or on processing circuitry (510) of a control unit (112).
